# EUROPEAN PATENT APPLICATION

(11) **EP 1 585 352 A1**
(43) Date of publication of application: **12.10.2005**
(21) Application number: 04290946.5
(22) Date of filing: 08.04.2004
(51) Int. Cl.: H04Q 7/32

(54) **Wireless telecommunication terminal with at least two different communication interfaces and method for operating the same**

(71) Applicant: ALCATEL, 75008 Paris (FR)
(72) Inventor: Jeannerod, Laurent, 67205 Oberhausbergen (FR)
(74) Representative: Rausch, Gabriele

(57) **Abstract**

The present invention concerns a wireless telecommunication terminal for a subscriber of a wide area telecommunication network, for example a Public Land Mobile Network, comprising a radio interface, at least one other alternative wireless communication interface and a data memory for storing subscriber specific profiles of applications and services.

Terminal (1) characterised in that said data memory (5) contains particular data (6) for enabling, managing and/or controlling the setting up and the upholding of a communication by means of the or at least one of the alternative wireless communication interface(s) (4).

## Description

The present invention is related to the field of wireless telecommunications, in particular the authorisation and control issues when connections to several networks from a single terminal are involved.

The present invention concerns a wireless telecommunication terminal having at least two different communication interfaces, a local network comprising at least two of such terminals and a method for operating such a terminal.

Wireless telecommunication terminals for a subscriber of a wide area telecommunication network are commonly known.

Some of these terminals comprise, in addition to the radio interface used for connection to the concerned Public Land Mobile Network (PLMN), also at least one other alternative wireless communication interface, as well as a data memory for storing subscriber specific profiles of applications and services.

The alternative wireless communication interface can for example be based on the well-known Bluetooth or WIFI protocol and technology.

In most of the GSM, GPRS and UMTS mobile telecommunication terminals, the data memory is part of a SIM (Subscriber Identity Module) type card which is delivered by the operator to the subscriber, after pre-programming with the subscriber's profile, and is mounted in the terminal handset in order to allow it to work. Generally said SIM card is removable by the user and authorises him to carry his or her mobile subscription profile and data through different types and generations of terminals. The interfaces and the interworking between the mobile terminal handset and the SIM card are fully standardised, as well as the features and the programming tools of such SIM cards.

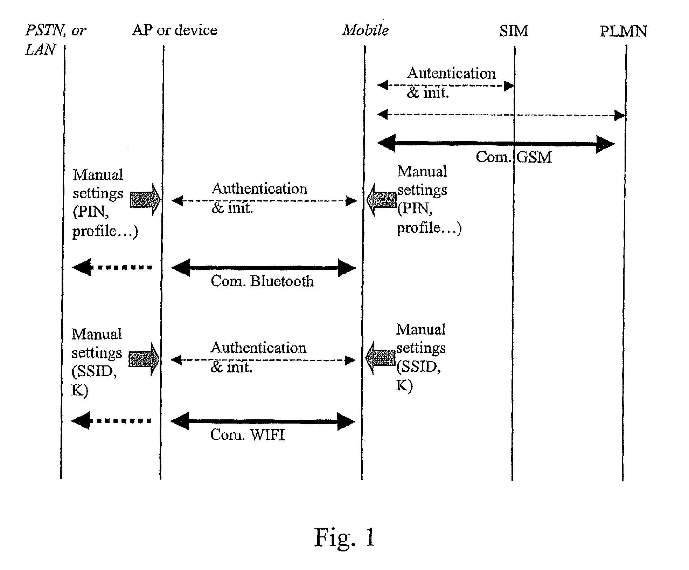

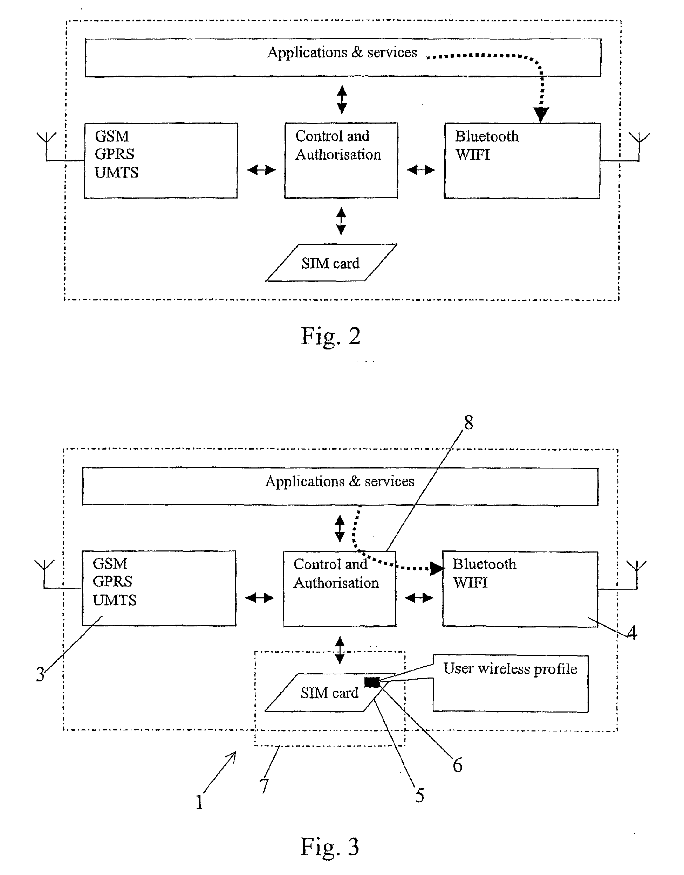

The components of such a multimode or dual mode mobile terminal using a SIM card is shown on figure 2 of the accompanying drawings and figure 1 shows schematically the communications which can be established with such a multimode mobile terminal, the data transmission which can occur, as well as the role of the SIM card in this configuration of possible communications and transmissions.

As can be seen from these figures, the memory data in the form of a SIM card makes control of access only to the PLMN network and the PLMN services. This control function does not apply in said multi or dual mode terminal to the possible alternative connections that can be offered with the Bluetooth or WIFI interface(s). The dotted line on figure 2 represents the direct link which is implemented today in multi or dual mode terminal when setting up a communication through the alternative wireless interface (Wifi, Bluetooth, ...).

As there is no interaction between the SIM card and the alternative wireless connection, the operator has no control over it. For Bluetooth, a pairing can be made with the simple input of a Bluetooth PIN (Personal Identification Number) code, without any notification to the operator. Also, for WIFI, just a SSID (Service Set Identifier) and a WEP (Wired Equivalence Privacy) key need to be registered.

Thus, the operator cannot keep a real control of alternative wireless connections, and cannot be sure that a terminal that has been delivered to a user, is really used on the infrastructure and network{s) on which it was expected to be used.

Furthermore, the main drawback for the user, of the present situation explained before, will be to find the right mobile terminal, with the right software release supporting the desired or expected wireless features, applications and services. It also implies a change of terminal in case of new expectations or wishes of the user.

US-A-6 353 737 discloses a method for modifying the service profile assigned to a subscriber with a terminal associated with an authorisation card, such as a SIM card.

Nevertheless, this document does not deal with the problem of authorising and controlling alternative wireless connection.

It is an aim of the present invention to solve the aforementioned problems and overcome the mentioned drawbacks.

Therefore, the present invention concerns a wireless telecommunication terminal for a subscriber of a wide area telecommunication network, for example a Public Land Mobile Network, comprising a radio interface, at least one other alternative wireless communication interface and a data memory for storing subscriber specific profiles of applications and services, terminal characterised in that said data memory contains particular data for enabling, managing and/or controlling the setting up and the upholding of a communication by means of the or at least one of the alternative wireless communication interface(s).

The present invention will be better understood thanks to the following description and drawings of an embodiment of said invention given as non limitative example thereof, in which:
figure 3 is a shematical representation of a multi or dual mode terminal according to the invention;
figure 4 is a shematical representation showing the possible connections for a dual mode terminal according to figure 3;
figure 5 shows shematically the connections and data transmissions involved when performing an OTA (Over The Air) updating of the subscriber profile;
figures 6 and 7 show shematically the possible connections and data transmissions involved when using a dual mode terminal according to two different embodiments of the invention, and,
figure 8 consists of a possible encoding sequence of a Bluetooth profile as an Elementary File for a SIM card of a terminal according to the invention.

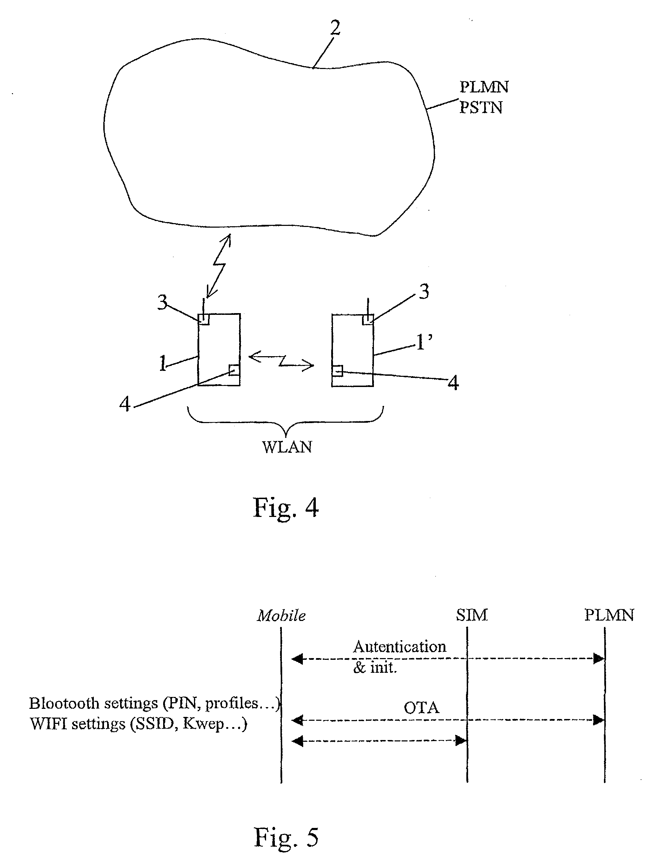

The figures 3 and 4 of the drawings show a wireless telecommunication terminal 1 for a subscriber of a wide area telecommunication network 2, for example a Public Land Mobile Network, comprising a radio interface 3, at least one other alternative wireless communication interface 4 and a data memory 5 for storing subscriber specific profiles of applications and services.

According to the invention said data memory 5 contains particular data 6 for enabling, managing and/or controlling the setting up and the upholding of a communication by means of the or at least one of the alternative wireless communication interface(s) 4.

In accordance with a preferred embodiment of the invention, the data memory 5 is part of an authorisation card or module 7, specifically allocated to the concerned subscriber and assembled, possibly removably, with said terminal I to form a functional terminal allocated to the concerned user and subscriber.

Preferably, the authorisation card or module 7 is a smart or chip card with an erasable memory 5, possibly selected from the group consisting of SIM cards, USIM cards, R-UIM cards and UICC cards, and is functionally associated with the managing unit 8 of said terminal 1 in order to enable, set up, manage and control telecommunications through the radio interface 3 and through the, each or at least one of the alternative wireless interface(s) 4.

The dotted line on figure 3 represents the modified link (in comparison with figure 2) which is implemented in connection with the invention and shows that the data memory 5, for example part of a SIM type card 7, determines the enabled and disabled alternative wireless links and details.

As can be seen from figure 5, said particular data 6 is at least partly received in said data memory 5, for set up and/or update purposes, from said wide area telecommunication network 2, for example a CDMA or TDMA network, through the radio interface 3.

In connection with an advantageous feature of the invention, said particular data 6 comprises parameters to optimise and/or secure a telecommunication using said at least one alternative wireless interface 4, at least during its set up phase.

Said data can also comprise some characteristics or parameters of at least one other terminal or device 1' with which a telecommunication can be established using said at least one alternative wireless interface 4 of said concerned terminal 1. Of course said other terminal or device 1' is provided with a compatible alternative interface 4 and uses a similar transmission protocol.

Preferably, the telecommunications are based on an Internet Protocol and in that the alternative interface 4 is a radio interface selected from the group comprising BLUETOOTH interfaces, WIFI interfaces and DECT interfaces.

As can be understood from the foregoing, the basic idea of the invention, in particular in connection with its preferred embodiment, is to use the SIM card 7 provided by an operator, to enable inside a terminal 1 different communications profiles, ways of network connection and also application services. For Bluetooth, it can be the control of profiles supported (example: CTP of Business profile...)- For WIFI and other technologies, it can be the control of every service upon IP layer (VoIP, media-stream and application...). By this way, the operator can keep full control of use of the terminals and of the services.

Preferably, the wireless profile of each user/subscriber stored in the data memory 5, contains the following features:
1) a list of wireless interfaces authorised and enabled:
   By this way, the terminal 1 can identify which interfaces 4 can be used. For Bluetooth, the goal is to identify the release of the standard 1.1 or 1.2. For WIFI, it will be clear identification of optional specification 802.11a, 802.11, and 802.g.
2) a list of settings for each interface:
   This list gives the details of settings for each wireless interface 4. For Bluetooth, it will be the list of profiles supported, and in option security parameter (Link key) that will simplify pairing procedure. For WIFI, it will be setting related to network configuration: WEP key and also SSID of network.
3) a list of audio modes and coders authorised and enabled:
   By this way, the operator will be able to make a fine tuning of different supported audio modes. In VoIP, it can be the list of standard coders: G723, G729, G711 µ/A. In Bluetooth synchronous mode, it can be the SCO type: eSCO HVx (SVSD & G711 A/µ).
4) an optional filtering:
   A possible filtering can introduce some control and limitations about protocols used. Only IP, UDP, RTP, HTTP....
5) optional settings for wireless telephony services:

Some facilities related to telephony services can be planned, such as:
- dialing plan (prefix of installation used for redial on different network).
- list of supplementary services numbers (list of short numbers assigned to dedicated PBX services).

All these parameters can be configured by mobile and fixed operators providing fixed and mobile services. They can be easily updated by OTA (Over The Air) procedure, by mobile operators.

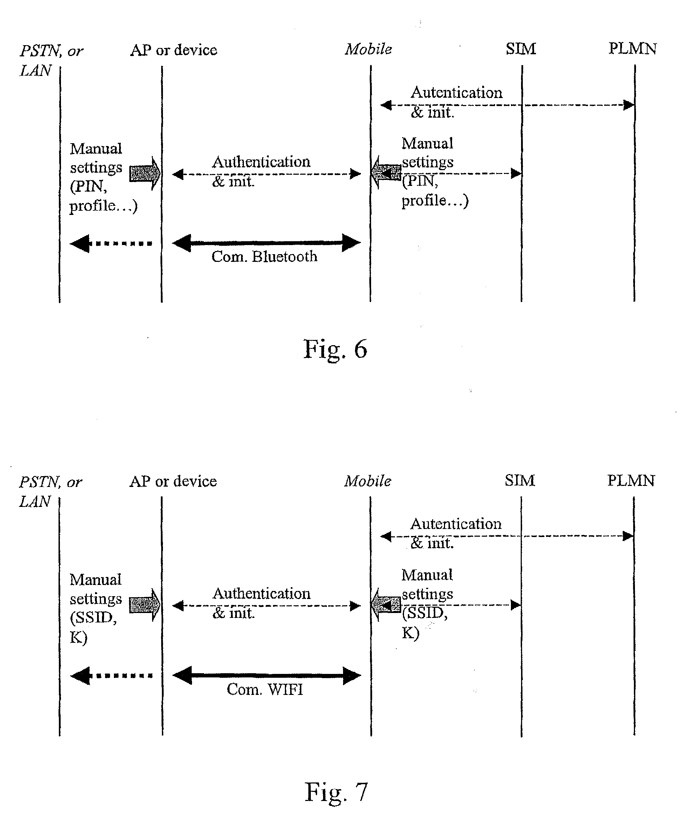

The invention will now be described in more details based on two embodiments and in relation to figures 6 and 7.
I) Details for Bluetooth dual mode terminal
   A possible the list of settings that could be used for a dual mode Bluetooth terminal 1 could for example comprise the following items:
   - wireless interface: Bluetooth 1.1 enable, WIFI disable
   - Bluetooth profiles enabled: HSP (headset Audio gateway), CTP (Cordless Telephony profile)
   - Bluetooth security setting (Link Key)
   - List of audio modes and coders: SCO HV3, CVSD and G711 A/µ
   - optional filtering: for example every IP services forbidden
   - optional settings for wireless telephony services:
      - dialing plan and prefixes (put 0 before extension numbers for external call)
      - definition of special extension numbers (voice mail, call forward.../ for example 308: immediate call forwarding, 315: voice mail).
II) Details for WIFI dual mode terminal

A possible list of settings that could be used for a dual mode Bluetooth terminal 1 could for example comprise the following items:
- wireless interface: WIFI 802.11a, b, g, Bluetooth disable
- network SSID
- WEP key (for encryption)
- list of audio modes and coders: for example G711 A/µ.
- optional filtering: for example every IP services open (HTTP, RTP, FTP)
- optional settings for wireless telephony services:
   - dialing plan and prefixes (put 0 before extension numbers for external call)
   - nothing else.

In order to implement the inventive features in practice, a new EF - for example called "Multiple Wireless Connection options" - is defined to support the service. EF (Elementary File) makes reference to the specifications of GSM SIM card standard 11.11. Encoding of Bluetooth profiles is made with UUID (Universal Unique Identifier) of service class defined in Bluetooth standard.

Its features can be the following:
- Identifier: '6Fxx'
- Structure: linear fixed Optional
- Record length: Xb+b55 bytes
- Update activity: low
- Access conditions:
   - READ CHV 1
   - UPDATE ADM
   - INVALIDATE ADM
   - REHABILITATE ADM

An example of encoding sequence is listed on figure 8.

The present invention also concerns, as shown on figure 4 a local wireless communication network based on an Internet Communication Protocol, characterised in that it comprises at least two multimode or dual mode wireless telecommunication terminals 1 and 1' as described before.

Furthermore, the invention also encompasses a method for operating a wireless telecommunication terminal 1, 1' of a subscriber of a telecommunication network 2, for example a Public Land Mobile Network, said terminal 1 comprising a radio interface 3, at least one other alternative wireless communication interface 4 and a data memory 5 for storing subscriber specific profiles of applications and services.

Said method, advantageously applied to a terminal 1 as described before, is characterised in that it consists in providing particular data 6, to be stored in said data memory 5, for enabling, managing and/or controlling the setting up and the upholding of a communication by means of the or at least one of the alternative wireless communication interface(s) 4, and in that said particular data 6 is used by said terminal 1 to set up, upon request of the subscriber, a telecommunication through said at least one alternative wireless interface 4.

According to a preferred embodiment of the invention, the concerned data memory 5 is part of an authorisation card or module 7 and said particular data 6 is programmed in said data memory 5 before said card or module 7 is assembled with the terminal 1 handset.

Preferably, the concerned particular data 6 is at least partly transmitted, during a setup phase and/or subsequent update phase(s), by the wide area telecommunication network 2 and received through the adapted radio interface 3.

By using a data memory 5 containing particular data 6 for each user, for example in the form of a SIM card allocated to said user, it is possible to customise the services offered to said user by means of the alternative wireless communication interface.

This solution is both flexible and efficient as it avoids developing specific software for the mobile terminal, allows to control access to local wireless available services and hinders a user from freely using services on different WLAN.

Thus, the invention allows to control the alternative interface 4, and the applications and services bound to it, in a similar way as the radio interface 3.

The present invention is, of course, not limited to the preferred embodiment described and represented herein, changes can be made or equivalents used without departing from the scope of the invention.

## Claims

1. Wireless telecommunication terminal for a subscriber of a wide area telecommunication network, for example a Public Land Mobile Network, comprising a radio interface, at least one other alternative wireless communication interface and a data memory for storing subscriber specific profiles of applications and services, terminal (1) **characterised in that** said data memory (5) contains particular data (6) for enabling, managing and/or controlling the setting up and the upholding of a communication by means of the or at least one of the alternative wireless communication interface(s) (4).

2. Terminal according to claim 1, **characterised in that** the data memory (5) is part of an authorisation card or module (7), specifically allocated to the concerned subscriber and assembled, possibly removably, with said terminal (1) to form a functional terminal allocated to the concerned user and subscriber.

3. Terminal according to anyone of claims 1 or 2, **characterised in that** the authorisation card or module (7) is a smart or chip card with an erasable memory (5), possibly selected from the group consisting of SIM cards, USIM cards, R-UIM cards and UICC cards, and is functionally associated with the managing unit (8) of said terminal (1) in order to enable, set up, manage and control telecommunications through the radio interface (3) and through the, each or at least one of the alternative wireless interface(s) (4).

4. Terminal according to anyone of claims 1 to 3, **characterised in that** said particular data (6) is at least partly received in said data memory (5), for set up and/or update purposes, from said wide area telecommunication network (2), for example a CDMA or TDMA network, through the radio interface (3).

5. Terminal according to anyone of claims 1 to 4, **characterised in that** said particular data (6) comprises parameters to optimise and/or secure a telecommunication using said at least one alternative wireless interface (4), at least during its set up phase.

6. Terminal according to anyone of claims 1 to 5, **characterised in that** said particular data (6) comprises some characteristics or parameters of at least one other terminal or device (1') with which a telecommunication can be established using said at least one alternative wireless interface (4).

7. Terminal according to anyone of claims 1 to 6, **characterised in that** the telecommunications are based on an Internet Protocol and **in that** the alternative interface (4) is a radio interface selected from the group comprising BLUETOOTH interfaces, WIFI interfaces and DECT interfaces.

8. Local wireless communication network based on an Internet Communication Protocol, **characterised in that** it comprises at least two multimode or dual mode wireless telecommunication terminals (1, 1') according to anyone of claims 1 to 7.

9. Method for operating a wireless telecommunication terminal of a subscriber of a telecommunication network, for example a Public Land Mobile Network, said terminal comprising a radio interface, at least one other alternative wireless communication interface and a data memory for storing subscriber specific profiles of applications and services, **characterised in that** it consists in providing particular data (6), to be stored in said data memory (5), for enabling, managing and/or controlling the setting up and the upholding of a communication by means of the or at least one of the alternative wireless communication interface(s) (4), and **in that** said particular data (6) is used by said terminal (1) to set up, upon request of the subscriber, a telecommunication through said at least one alternative wireless interface (4).

10. Method according to claim 9, **characterised in that** the concerned data memory (5) is part of an authorisation card or module (7) and **in that** said particular data (6) is programmed in said data memory (5) before said card or module (7) is assembled with the terminal (1) handset.

11. Method according to anyone of claims 9 and 10, **characterised in that** the concerned particular data (6) is at least partly transmitted, during a setup phase and/or subsequent update phase(s), by the wide area telecommunication network (2) and received through the adapted radio interface (3).

12. Method according to anyone of claims 9 to 11, **characterised in that** the concerned wireless telecommunication terminal (1) is a terminal according to anyone of claims 1 to 7.

## Amended claims

### Amended claims in accordance with Rule 86(2) EPC.

**1.** Wireless telecommunication terminal for a subscriber of a wide area telecommunication network, comprising a radio interface, at least one other alternative wireless communication interface and a data memory for storing subscriber specific profiles of applications and services, terminal (1) **characterised in that** said data memory (5) contains particular data (6) for enabling, managing and/or controlling the setting up and the upholding of a communication by means of the or at least one of the alternative wireless communication interface(s) (4) while said particular data (6) is at least partly received in said data memory (5), for set up and/or update purposes, from said wide area telecommunication network (2), through the radio interface (3).

**2.** Terminal according to claim 1, **characterised in that** the data memory (5) is part of an authorisation card or module (7), specifically allocated to the concerned subscriber and assembled, possibly removably, with said terminal (1) to form a functional terminal allocated to the concerned user and subscriber.

**3.** Terminal according to anyone of claims 1 or 2, **characterised in that** the authorisation card or module (7) is a smart or chip card with an erasable memory (5), possibly selected from the group consisting of SIM cards, USIM cards, R-UIM cards and UICC cards, and is functionally associated with the managing unit (8) of said terminal (1) in order to enable, set up, manage and control telecommunications through the radio interface (3) and through the, each or at least one of the alternative wireless interface(s) (4).

**4.** Terminal according to anyone of claims 1 to 3, **characterised in that** said particular data (6) comprises parameters to optimise and/or secure a telecommunication using said at least one alternative wireless interface (4), at least during its set up phase.

**5.** Terminal according to anyone of claims 1 to 4, **characterised in that** said particular data (6) comprises some characteristics or parameters of at least one other terminal or device (1') with which a telecommunication can be established using said at least one alternative wireless interface (4).

**6.** Terminal according to anyone of claims 1 to 5, **characterised in that** the telecommunications are based on an Internet Protocol and **in that** the alternative interface (4) is a radio interface selected from the group comprising BLUETOOTH interfaces, WIFI interfaces and DECT interfaces.

**7.** Local wireless communication network based on an Internet Communication Protocol, **characterised in that** it comprises at least two multimode or dual mode wireless telecommunication terminals (1, 1') according to anyone of claims 1 to 6.

**8.** Method for operating a wireless telecommunication terminal of a subscriber of a telecommunication network, said terminal comprising a radio interface, at least one other alternative wireless communication interface and a data memory for storing subscriber specific profiles of applications and services, **characterised in that** it consists in providing particular data (6), to be stored in said data memory (5), for enabling, managing and/or controlling the setting up and the upholding of a communication by means of the or at least one of the alternative wireless communication interface(s) (4), and **in that** said particular data (6) is used by said terminal (1) to set up, upon request of the subscriber, a telecommunication through said at least one alternative wireless interface (4) while the concerned particular data (6) is at least partly transmitted, during a setup phase and/or subsequent update phase(s), by the wide area telecommunication network (2) and received through the adapted radio interface (3).

**9.** Method according to claim 8, **characterised in that** the concerned data memory (5) is part of an authorisation card or module (7) and **in that** said particular data (6) is programmed in said data memory (5) before said card or module (7) is assembled with the terminal (1) handset.

**10.** Method according to anyone of claims 8 to 9, **characterised in that** the concerned wireless telecommunication terminal (1) is a terminal according to anyone of claims 1 to 7.
